(19) Europäisches Patentamt
European Patent Office
Office européen des brevets

(11) EP 2 566 069 B1

(12) FASCICULE DE BREVET EUROPEEN

(45) Date de publication et mention de la délivrance du brevet:
**24.09.2014 Bulletin 2014/39**

(51) Int Cl.:
***H04B 7/185*** (2006.01)

(21) Numéro de dépôt: **12181282.0**

(22) Date de dépôt: **22.08.2012**

(54) **Procédé de détection de messages de type "Système d'Identification Automatique" pour surveillance de navires et de bouées par satellite.**

Erkennungsverfahren für Nachrichten des Typs "Automatisches Identifizierungssystem" zur Überwachung von Schiffen und Bojen durch Satellit.

Detection method of messages of type "Automatic Identification System" for monitoring of vessels and buoys by satellite.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2011 FR 1157849**

(43) Date de publication de la demande:
**06.03.2013 Bulletin 2013/10**

(73) Titulaire: **Centre National d'Etudes Spatiales
75039 Paris Cedex 01 (FR)**

(72) Inventeurs:
  • **De Latour, Antoine**
    **31500 Toulouse (FR)**
  • **Faup, Michel**
    **31000 Toulouse (FR)**

(74) Mandataire: **Office Freylinger
P.O. Box 48
8001 Strassen (LU)**

(56) Documents cités:
**WO-A1-2008/148188**

• **Anonymous: "REPORT ITU-R M.2084: SATELLITE DETECTION OF AUTOMATIC IDENTIFICATION SYSTEM MESSAGES.", ITU , 1 janvier 2006 (2006-01-01), pages 1-38, XP002674820, Extrait de l'Internet: URL:http://www.itu.int/dms_pub/itu-r/opb/r ep/R-REP-M. 2084-2007-PDF-E.pdf [extrait le 2012-07-30]**
• **Anonymous: "RECOMMENDATION ITU-R M. 1371-4; TECHNICAL CHARACTERISTICS FOR AN AUTOMATIC IDENTIFICATION SYSTEM USING TIME-DIVISION MULTIPLE ACCESS IN THE VHF MARITIME MOBILE BAND.", ITU-R Radiocommunication Sector of ITU , avril 2010 (2010-04), pages i-ii,1-142, XP002674822, Extrait de l'Internet: URL:http://www.itu.int/dms_ pubrec/itu-r/re c/m/R-REC-M.1371-4-201004-I!! PDF-E.pdf [extrait le 2012-07-30]**

**Description**

**Domaine technique**

La présente invention concerne un système de surveillance de navires et de bouées par satellites.

**Etat de la technique**

Le système d'identification automatique (SIA ; en anglais : automatic identification system, AIS) est un système d'échange de messages courts entre des navires, des stations côtières et des systèmes d'aides à la navigation dans un rayon de 20 à 30 milles marins (37 à 56 km). Le SIA utilise l'accès multiple par répartition dans le temps auto-organisé (AMRTAO ; en anglais : Self-Organized Time Division Multiple Access, SOTDMA) dans la bande attribuée aux services mobiles maritimes en ondes métriques. La communication a lieu sur les canaux SIA 1 (centré sur 162,975 MHz) ou SIA 2 (centré sur 162,025 MHz), larges à chaque fois de 25 kHz. Les messages échangés sont de longueur prédéfinie et comportent des données telles que l'identification du navire, sa position, sa route et sa vitesse.

Chacun des canaux de communication est divisé dans le temps en des trames d'une durée de 60 s. Chaque trame est divisée en 2250 intervalles de temps, dont chacun peut être occupé, en fonctionnement nominal, par un message (ou compte-rendu) SIA. En mode normal, chaque navire émet ses messages SIA de manière alternative sur les deux canaux de communication. La fréquence des messages SIA d'un navire donné dépend de sa vitesse : si le navire est en route, un message est envoyé toutes les 2-10 s, l'espacement entre deux messages consécutifs étant d'autant plus court que le navire est rapide ; si le navire est immobilisé, les messages sont envoyés toutes les 3 minutes. Les intervalles entre les messages des différentes plates-formes participant au système sont indiqués, par exemple dans le rapport UIT-R M.2084 : « Détection par satellite de messages du système d'identification automatique ».

Les récepteurs SIA des navires et des stations côtières reçoivent les messages de tous les navires à proximité, ce qui leur permet de créer une cartographie détaillée de l'environnement local.

Le SIA fonctionne sans contrôleur AMRT central qui gère l'accès des navires aux intervalles de temps. Chaque transpondeur SIA surveille les canaux de communication et réserve dans chaque message l'intervalle de transmission qu'il utilisera pour envoyer le prochain message. Des procédures de résolution de conflit permettent d'éviter, dans une zone géographique locale, les collisions de messages dans un même intervalle de temps.

Cela n'est pas vrai pour la détection de messages SIA par satellite. En effet, l'empreinte au sol de la ou des antennes d'un satellite en orbite basse couvre typiquement de nombreuses zones géographiques locales, qui ne sont généralement pas coordonnées entre elles. Le satellite observera donc des collisions aléatoires de messages dans le même intervalle de temps, ce qui pourra entraîner la perte d'un ou de plusieurs des messages en collision. La probabilité d'une détection et d'un décodage corrects d'un message SIA donné décroît à mesure que le taux d'apparition des collisions augmente. Le rapport UIT-R M.2084 donne de plus amples renseignements à ce sujet. Ce document indique aussi des pistes pour améliorer la capacité du ou des satellites :

o Les décalages Doppler causés par le mouvement du satellite dépendent de la position des émetteurs dans l'empreinte au sol, ce qui permet une discrimination des messages sur la base du décalage Doppler. Les décalages Doppler causés par le mouvement du satellite peuvent atteindre ± 4 kHz. Pour cette approche, il faut toutefois tenir compte du fait que la norme SIA tolère, pour les émetteurs AMRT des navires, une erreur relative à la fréquence de la porteuse de ± 500 Hz.

∘ Il existe une importante redondance d'information entre deux messages SIA consécutifs émis par un navire donné. Le rapport UIT-R M.2084 suggère la transmission en continu par liaison descendante des données reçues sur les deux canaux SIA en vue d'un traitement spécifique dans une station terrestre au sol, notamment d'une corrélation en continu des signaux SIA entrants avec des copies numérisées des signaux reçus précédemment dans un intervalle de temps correspondant à la durée d'un passage du satellite.

Le document US 7,876,865 décrit un système et un procédé de détection de messages SIA dans l'espace et de décodage de ceux-ci. Les signaux SIA sont numérisés et des messages SIA candidats sont identifiés par corrélation des données numérisées avec des signaux prédéfinis qui correspondent à une séquence de code de message SIA pour différents décalages Doppler. La séquence de code de message utilisée pour la corrélation correspond au début de message commun à tous les messages SIA, c.-à-d. la séquence de conditionnement (en anglais : training sequence) de 24 bits et le fanion de début (en anglais : start flag) de 8 bits. Afin d'améliorer la détection de messages SIA candidats, la séquence de code de message utilisée pour la corrélation peut être rallongée de parties de message connues, comme par exemple l'identifiant de navire (en l'occurrence le numéro MMSI). Le document US 7,876,865 reprend donc l'idée du rapport UIT-R M.2084 consistant à essayer de détecter à nouveau des messages d'émetteurs détectés peu de temps avant. Cette approche exploite le fait qu'un nombre significatif de bits de deux messages consécutifs du même navire sont les mêmes.

Des détails sur le SIA peuvent être trouvés dans la recommandation UIT-R M.1371-4 (04/2010) et ses annexes.

**Objet de l'invention**

Un objet de la présente invention est d'améliorer la détection des messages SIA par satellite, par exemple, pour réaliser une cartographie régionale ou mondiale des émetteurs SIA.

**Description générale de l'invention**

Selon l'invention, un procédé de détection de messages SIA comprend la mise à disposition de données numériques représentant des signaux reçus par un satellite sur au moins un canal SIA, et l'identification d'un message candidat dans les données numériques par corrélation des données numériques avec un message fragmentaire hypothétique. Le message fragmentaire hypothétique comporte au moins un fragment de message SIA qui dépend du temps d'émission et/ou de la position de l'émetteur et qui est déterminé à l'aide d'une base de données d'émetteurs SIA.

Le procédé selon l'invention repose donc sur une base de données dans laquelle sont stockées des informations sur des émetteurs SIA. Ces informations sont de prime abord utilisées pour déterminer quels émetteurs SIA se trouvent dans l'empreinte au sol du satellite au moment de son passage (c.-à-d. au temps de la réception des signaux convertis en les données numériques considérées). Au lieu de chercher dans les données numériques un message SIA quelconque - par corrélation des données numériques avec un fragment de message commun à tous les messages SIA (notamment la séquence de conditionnement éventuellement suivie du fanion de début) - l'invention propose de chercher dans les données numériques un message SIA d'un émetteur spécifique, dont on sait, grâce à la base de données, qu'il se trouve (ou : se trouvait - au cas où les données ne seraient pas évaluées en temps réel -) dans la zone desservie par le satellite au moment de la réception des signaux. Le message fragmentaire hypothétique consiste donc en des fragments de message prédictibles à l'aide de la base de données et de la trajectoire du satellite (c.-à-d. la position du satellite en fonction du temps). P.ex., chaque message SIA contient le champ « ID utilisateur » qui identifie l'émetteur de manière univoque (il s'agit normalement du numéro MMSI du navire). En utilisant pour la corrélation avec les données numériques un message fragmentaire comprenant la séquence de conditionnement, le fanion de début et le champ « ID utilisateur », on peut chercher de manière ciblée des messages SIA provenant à l'origine d'un émetteur SIA spécifique. Il sera apprécié que la hauteur du pic de corrélation relativement au bruit augmente avec la taille (le nombre de bits) du message fragmentaire. Selon l'invention, on prédit en plus des parties dynamiques du message candidat. Par partie ou champ « dynamique », on entend ici une partie de message SIA susceptible de changer d'un message à l'autre, par exemple des indications de position, de navigation, etc. Comme indiqué plus haut, la partie dynamique du message fragmentaire hypothétique peut comporter au moins un fragment de message SIA qui dépend du temps d'émission (p.ex. des bits des champs « horodatage », « Année UTC », « Mois UTC », « Jour UTC », « Heure UTC », « Minute UTC » et/ou « Seconde UTC ») et/ou de la position de l'émetteur (p.ex. des bits des champs « longitude » et/ou « latitude »). Des descriptions des différents champs de messages SIA se trouvent dans la recommandation UIT-R M.1371-4 (04/2010) et ses annexes.

Selon un mode de réalisation préféré du procédé inventif, le message fragmentaire hypothétique comprend au moins un fragment de message SIA dépendant de la position de l'émetteur. La composition de ce fragment de message inclut :

⚬ l'identification, à partir de la base de données d'émetteurs SIA, d'un émetteur SIA localisé dans une zone desservie par le satellite au moment de la réception des signaux ; et

⚬ la détermination de l'au moins un fragment de message SIA dépendant de la position de l'émetteur sur la base d'une position de l'émetteur identifié stockée dans la base de données.

De préférence, l'au moins un fragment de message SIA dépendant de la position de l'émetteur comprend les bits de poids fort du champ « longitude » et/ou les bits de poids fort du champ « latitude ». On suppose ici qu'entre deux repérages consécutifs d'un même navire, la position de celui-ci est au moins grossièrement la même. On peut prédire la nouvelle position d'un navire dans un rayon autour de sa dernière position connue, qui correspond au produit de la vitesse maximale du navire et du temps qui s'est écoulé depuis le dernier message. La prédiction peut être plus précise encore si d'autres paramètres, comme, p.ex. la destination du navire, son dernier cap, sa dernière vitesse, son dernier statut de navigation, etc. sont connus (c-à-d. stockés dans la base de données). Etant donné qu'un émetteur envoie ses messages SIA toutes les 2 à 10 s, l'estimation de position sera très précise pour des messages SIA reçus pendant le même passage de satellite. Entre deux passages de satellite, un émetteur peut rester inobservé pendant quelques heures (p.ex. 1 à 2 h). Plus l'estimation de position est précise, plus de bits à poids fort des champs « longitude » et « latitude » seront connus.

Les données numériques sont de préférence horodatées (p.ex. par le satellite). L'au moins un fragment de message SIA dépendant du temps d'émission peut alors être déterminé sur la base de l'horodatage des données numériques. L'au moins un fragment de message SIA dépendant du temps d'émission peut notamment comprendre des bits du champ « horodatage » ou des bits des champs « Année UTC », « Mois UTC », « Jour UTC », « Heure UTC », « Minute UTC » et/ou « Seconde UTC ».

Avantageusement, le message fragmentaire hypothétique comprend des bits d'un ou de plusieurs champs statiques spécifiques à l'émetteur identifié dans la base de données. Par champ « statique », on entend ici un champ dont le contenu ne change pas d'un message à l'autre pour un émetteur SIA donné. Des exemples de champs statiques, sont le champ « ID utilisateur » (contenant le numéro MMSI), le champ « indicateur de la version du SIA », le champ « numéro OMI » (numéro de l'organisation maritime internationale), le champ « Indicatif d'appel », le champ « nom » (nom du navire), le champ « type de navire et type de cargaison », le champ « dimensions générales/référence pour position », le champ « type de dispositif électronique de détermination de la position ».

Outre le ou les fragments dépendant du temps d'émission ou de la position de l'émetteur, le message fragmentaire hypothétique peut comprendre des bits d'un ou de plusieurs autres champs dynamiques spécifiques à l'émetteur identifié dans la base de données, par exemple le champ « fanion RAIM » (de l'anglais « receiver autonomous integrity monitoring » : surveillance autonome de l'intégrité du récepteur), le champ «indicateur de manoeuvre particulière », le champ « heure estimée d'arrivée », le champ « tirant d'eau actuel », le champs « destination », le champs « statut de navigation », le champ « route de fond », le champ « vitesse de fond », et/ou le champ « état de communication ».

De préférence, après l'identification d'un message candidat dans les données numériques, le message candidat est décodé et des informations contenues dans le message décodé sont utilisées pour mettre à jour la base de données d'émetteurs SIA.

L'identification du message candidat est de préférence réalisée par corrélation des données numériques avec plusieurs messages fragmentaires hypothétiques. En effet, il pourra être nécessaire de tester plusieurs hypothèses pour identifier le message candidat, notamment si le signal spécifique au message est très faible ou bruité. Une raison est que les fragments prédictibles du message candidat peuvent être séparés entre eux par des lacunes. En principe, la longueur de ces lacunes est connue, car la norme SIA prévoit des longueurs de champ nominales fixes. Cependant, la longueur d'un champ peut varier si des bits de bourrage doivent être insérés pour éviter l'apparition d'une séquence de bits identique aux fanions de début ou de fin. Comme on ne peut pas savoir, a priori, si les lacunes (les parties inconnues du message candidat) contiennent des bits de bourrage, les plusieurs messages fragmentaires hypothétiques peuvent être conçus de sorte à tester la présence ou l'absence de bits de bourrage dans le message candidat. Les corrélations correspondant aux différents messages fragmentaires hypothétiques peuvent être calculées en série et/ou en parallèle.

La position du satellite au moment de la réception de signaux peut être obtenue de plusieurs façons. Par exemple, le satellite peut être équipé d'un système de géopositionnement (GPS, Doris, Galileo, Glonass, Compass ou autre) et ainsi relier les données numériques à des données de trajectoire de satellite. Une autre possibilité est d'obtenir les données de trajectoire de satellite par un centre de contrôle de satellite (centre TT&C : télémétrie, traçage et commande) ou un réseau de surveillance utilisant p.ex. un système de détermination de distance à laser. Encore une autre possibilité est d'estimer la position du satellite au moment de la réception de signaux par triangulation (par relevé de distances) par rapport à des émetteurs dont des messages SIA sont identifiés dans les données numériques. La trajectoire du satellite peut ainsi être reconstruite sur la base des messages SIA qu'il reçoit.

Pour la corrélation des données numériques avec le message fragmentaire hypothétique, le début du message fragmentaire hypothétique est de préférence synchronisé avec un début d'intervalle de temps de la trame SIA. Les données numériques étant horodatées, et les trames SIA étant synchronisées sur le temps UTC, la plage d'incertitude temporelle est réduite à la gigue de synchronisation du SIA ($\pm$ 312 $\mu$s correspondant à $\pm$ 3 bits) augmentée d'un certain tampon pour tenir compte de l'incertitude de la position du navire. En tout, on pourra supposer que la plage d'incertitude temporelle est de $\pm$ 6 bits par rapport au temps UTC.

De préférence, pour la corrélation des données numériques avec le message fragmentaire hypothétique, un décalage Doppler calculé pour le message fragmentaire hypothétique en fonction d'une position de l'émetteur est compensé. Le décalage Doppler d'un message SIA dépend de la vitesse relative entre le satellite et l'émetteur du message. Comme on peut négliger la vitesse de l'émetteur SIA dans le référentiel terrestre, on peut exprimer le décalage Doppler comme fonction de la position de l'émetteur dans le référentiel du satellite. Pour un satellite en orbite basse, le décalage Doppler sera compris dans un intervalle de $\pm$ 4,5 kHz. Si on admet que la position de l'émetteur est connue au moins à 100 km près (rayon d'environ 100 km autour de la dernière position détectée) et que la trajectoire du satellite est également connue, l'incertitude du décalage Doppler sera de moins de 500 Hz. Toutefois, pour une faible hauteur (l'angle entre la direction visée et l'horizontale) du satellite l'incertitude du décalage Doppler sera normalement de l'ordre de $\pm$ 100 Hz.

Toutefois, comme la norme SIA tolère une erreur relative à la fréquence de la porteuse des émetteurs de $\pm$

500 Hz, l'incertitude totale dans le domaine des fréquences est de ± 1000 Hz (incertitude du décalage Doppler plus l'erreur relative à la fréquence de la porteuse). Pour un émetteur SIA donné, l'erreur relative à la fréquence de la porteuse est normalement essentiellement constante dans le temps. Avantageusement, cette erreur est donc stockée dans la base de données, afin de pouvoir en tenir compte pour la recherche dans le domaine des fréquences. Pour un émetteur SIA dont l'erreur relative à la fréquence de la porteuse peut être extraite de la base de données, l'incertitude dans le domaine des fréquences sera donc celle du décalage Doppler uniquement (± 100 Hz). Si l'erreur relative à la fréquence de la porteuse d'un certain émetteur SIA n'est pas encore enregistrée dans la base de données, il convient de la calculer à partir de la fréquence à laquelle l'on détecte le pic de corrélation et du décalage Doppler théorique (obtenu en utilisant la position du satellite et de l'émetteur) et de la stocker dans la base de données pour son utilisation ultérieure.

Finalement, pour la corrélation des données numériques avec le message fragmentaire hypothétique, il est de préférence également tenu compte de l'index de modulation de l'émetteur SIA, stocké dans la base de données. Pour rechercher un message d'un émetteur SIA spécifique, il est avantageux de connaître son indice de modulation (valeur nominale pour SIA : 0,5). Si l'indice de modulation est a priori inconnu, on peut donc effectuer la corrélation pour plusieurs hypothèses d'indice de modulation (p.ex. dans la plage de $0{,}5 \pm 0{,}1$) et stocker dans la base de données la valeur de l'indice de modulation qui a maximisé la corrélation.

Un autre aspect de l'invention concerne un programme d'ordinateur, comprenant des instructions pouvant être exécutées par ordinateur, qui, lorsqu'elles sont exécutées par un ordinateur, font en sorte que l'ordinateur réalise le procédé tel que décrit ci-dessus. Encore un autre aspect de l'invention concerne un produit de programme d'ordinateur, comprenant un support informatique (p.ex. une mémoire vive ou un mémoire morte, un CD-ROM, une clé USB, un disque dur, etc.) contenant les instructions du programme.

**Brève description des dessins**

D'autres particularités et caractéristiques de l'invention ressortiront de la description détaillée de quelques modes de réalisation avantageux présentés ci-dessous, à titre d'illustration, avec référence aux dessins annexés. Ceux-ci montrent:

Fig. 1 : est un schéma général d'un système de détection par satellite de messages SIA ;

Fig. 2 : est une illustration de la structure d'un message SIA ;

Fig. 3 : est un schéma de principe d'un procédé de détection de messages SIA selon un premier mode d'exécution de l'invention ;

Fig. 4 : est une illustration d'un message fragmentaire hypothétique pour détecter un message SIA ;

Fig. 5 est une illustration du principe de la prédiction de la nouvelle position d'un navire ;

Fig. 6 : est une illustration des fragments de message (bits connus) et des lacunes (bits a priori inconnus) d'un message fragmentaire hypothétique ;

Fig. 7 : est une illustration schématique de l'empreinte au sol d'une antenne réseau à commande de phase d'un satellite OTB ;

Fig. 8 : est un schéma de principe d'un procédé de détection de messages SIA selon un deuxième mode d'exécution de l'invention.

**Description d'une exécution préférée**

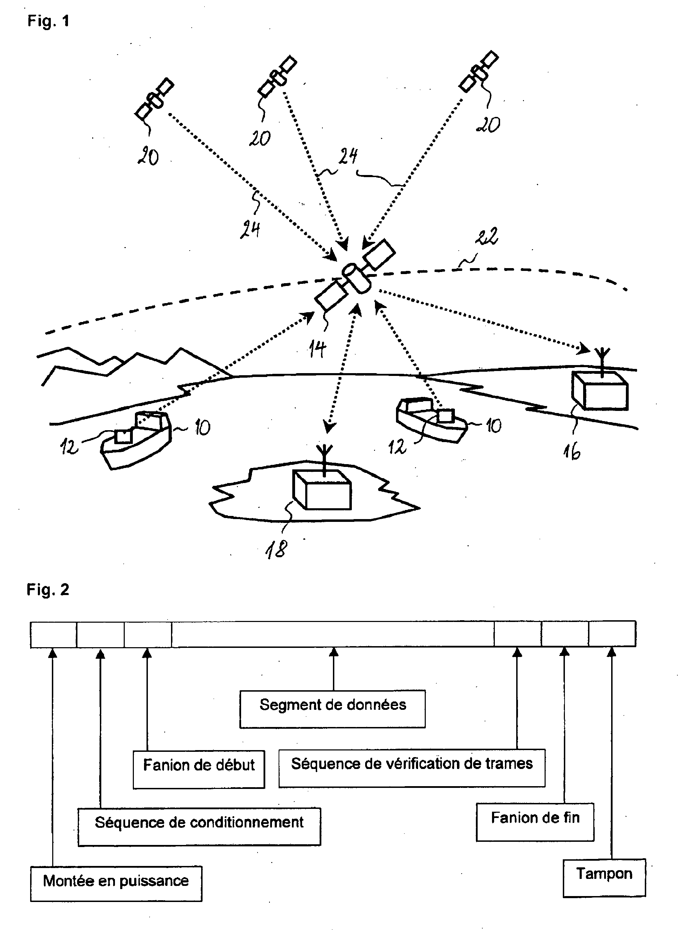

La figure 1 montre le schéma général d'un système de détection par satellite de messages SIA. Des navires 10, équipés chacun d'un émetteur/récepteur SIA 12, émettent des messages SIA contenant des données telles que l'identification du navire (numéro MMSI), la localisation en coordonnées WGS 84 (système géodésique mondial, révision de 1984), la route, la vitesse et d'autres informations de statut. Les messages sont reçus par les récepteurs SIA des navires et des stations côtières à proximité. Chaque navire 10 peut ainsi se créer une cartographie détaillée des émetteurs SIA dans son environnement local (dans un rayon d'environ de 20 à 30 milles marins), qui vient compléter les informations fournies par les radars et autres aides à la navigation.

Les messages SIA peuvent aussi être reçus par des satellites 14 en orbite terrestre basse (OTB), c.-à-d. qui évoluent à une altitude d'entre 160 et 2000 km. L'empreinte au sol d'une antenne d'un satellite en orbite basse couvre typiquement une zone géographique dont les dimensions dépassent de loin celles des cellules dans lesquelles le SIA évite les collisions de messages. Comme les cellules ne sont généralement pas coordonnées entre elles, les signaux SIA reçus par le satellite pourront contenir des messages qui se chevauchent dans le temps et en fréquence. Le problème se pose surtout dans les zones dans lesquelles la densité de navires est élevée.

Les canaux SIA 1 (centré sur 162,975 MHz) ou SIA 2 (centré sur 162,025 MHz), ci-après simplement appelés signaux SIA, sont reçus par le satellite 14 et numérisés. Les données numériques ainsi obtenues sont horodatées et transmises à une ou plusieurs stations au sol 16 via une liaison descendante. On notera que le système de surveillance de navires peut comprendre plusieurs satellites OTB et plusieurs stations au sol. Le contrôle du ou des satellites OTB se fait par un ou plusieurs centres de contrôle de satellite 18. Pour des raisons de lisibilité, on fera référence, dans la suite, à un satellite OTB. Si plusieurs satellites OTB sont utilisés, les traitement des données des différents satellites est de préférence effectué en parallèle.

De préférence, le satellite OTB 14 est équipé d'un système de géopositionnement, par exemple un récepteur GPS. Le satellite peut alors déterminer sa position à l'aide de signaux de radionavigation 24 provenant de satellites GNSS 20. Les données numériques représentant les signaux SIA peuvent alors être reliés à la trajectoire 22 du satellite OTB de manière bijective : chaque séquence de données peut être attribuée de manière univoque à un instant et à une position du satellite OTB.

La figure 2 est une illustration de la structure d'un message SIA. Chaque message SIA comporte 256 bits et est subdivisé en un champ de montée en puissance (8 bits), une séquence de conditionnement (24 bits), un fanion de début de message (8 bits), une séquence de données (168 bits), une séquence de vérification de trames (16 bits), un fanion de fin de message (8 bits) et un tampon (24 bits). On notera que la Recommandation UIT-R M.1371-4 mentionne un tampon de début ainsi qu'un tampon de fin. Dans ce document, ces deux champs sont traités comme un seul.

La séquence de données d'un message SIA est, elle aussi, subdivisée en plusieurs champs de longueur déterminée. La structure de la séquence de données et les champs transmis dépendent du type de message. On note donc que chaque message SIA comprend des séquences de bits qui sont communes à tous les messages SIA, p.ex. le champ de montée en puissance, la séquence de conditionnement, le fanion de début et le fanion de fin. Si on se limite à un certain type de message SIA, le champ « ID message » est également connu. Les autres séquences de bits sont spécifiques à l'émetteur. Parmi celles-ci on peut encore faire une distinction entre des séquences de bits spécifiques à l'émetteur « statiques », qui sont programmées dans l'émetteur à durée indéterminée, et des séquences de bits spécifiques à l'émetteur « dynamiques », qui sont susceptibles de changer d'un message à l'autre.

Le tableau ci-dessous indique des séquences de bits spécifiques à l'émetteur « statiques » :

| Nom de champ | Nombre de bits |
|---|---|
| ID utilisateur | 30 |
| indicateur de la version du SIA | 2 |
| numéro OMI | 30 |
| indicatif d'appel | 42 |
| nom | 120 |
| type de navire et type de cargaison | 8 |
| dimensions générales/référence pour position | 30 |
| type de dispositif électronique de détermination de la position | 4 |

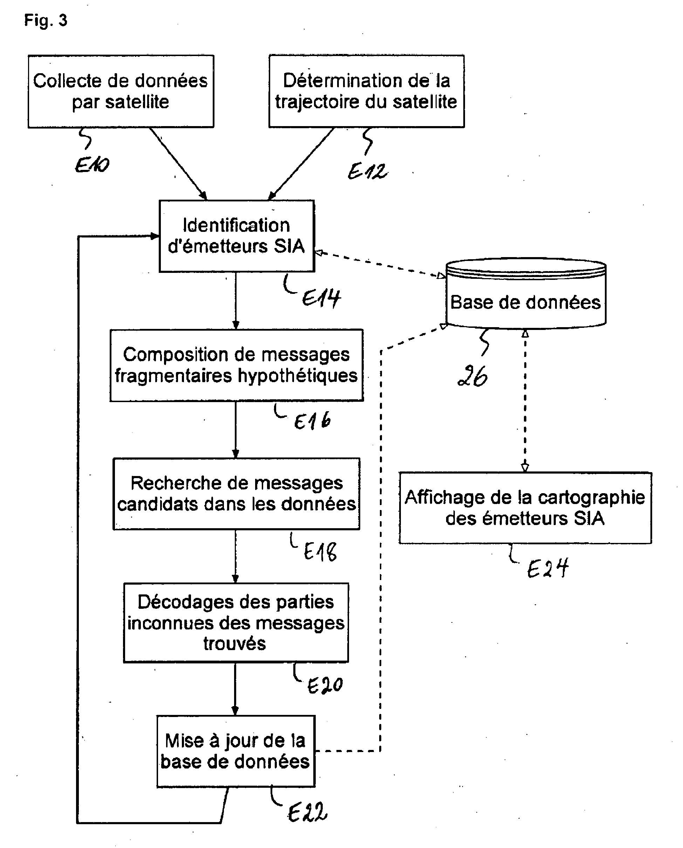

La figure 3 montre le schéma de principe du procédé inventif selon un premier mode d'exécution préféré. L'invention exploite le fait qu'un certain nombre de bits de la séquence de données d'un message SIA peuvent être prédits si l'on connaît l'émetteur SIA qui a émis le message et si, en plus, on dispose de certaines informations supplémentaires concernant cet émetteur, notamment sa position. Les bits qui peuvent être prédits comprennent notamment les bits des champs spécifiques à l'émetteur « statiques », car il suffit de sauvegarder le contenu de ces champs dans une base de données d'émetteurs SIA. D'autres bits qui peuvent être prédits sont certains bits des champs spécifiques à l'émetteur « dynamiques », comme, par exemple, les bits de poids fort des champs « longitude » et « latitude » - à condition, toutefois, de repérer la position de l'émetteur concerné à un rythme suffisamment élevé pour ne pas « perdre l'émetteur de vue ».

La collecte des données (étape E10) est effectuée au niveau du satellite OTB, comme décrit ci-dessus. Les données numériques horodatées sont transmises à un centre de calcul, qui peut se trouver dans une station au sol 16 en liaison directe avec le satellite 14 ou à un autre endroit en communication avec la station au sol 16.

Pour détecter des messages SIA, les données numériques provenant (directement ou indirectement) du ou des satellites OTB sont normalement corrélées avec la séquence de conditionnement. Cette séquence étant assez courte, elle ne permettra pas de détecter un pic de corrélation, et donc un message candidat, en présence d'un signal bruité. Pour pouvoir prédire un nombre plus élevé de bits des messages SIA non encore détectés dans les données numériques, on identifie les émetteurs SIA susceptibles d'avoir émis un message SIA dans la zone couverte par le satellite OTB, à l'heure de son passage.

A cette fin, on détermine d'abord la trajectoire du satellite (étape E12). La trajectoire (c.-à-d. la position en fonction du temps) est de préférence calculée au niveau du satellite, p.ex. à l'aide d'un système de géopositionnement. Dans ce cas, les données concernant la trajectoire du satellite peuvent être transmises au centre de calcul par la même liaison de communication que les données des signaux SIA. Alternativement, le centre de calcul peut recevoir les données relatives à la trajectoire du satellite OTB de la part d'un centre de contrôle de satellite 18 (centre TT&C), par une liaison de communication quelconque.

Pour identifier les émetteurs SIA susceptibles d'avoir émis un message SIA contenu dans les données numériques (étape E14), on détermine à quelle position le satellite se trouvait à la réception des signaux SIA. Ensuite, on consulte une base de données d'émetteurs SIA 26, qui retourne les émetteurs SIA dont la dernière position enregistrée dans la base de données 26 se trouve dans zone prédéterminée autour de la position du satellite. Cette zone prédéterminée peut comprendre l'empreinte au sol de l'antenne ou des antennes du satellite et éventuellement une zone périphérique. Cette zone périphérique permet de prendre en compte des navires dont la dernière position enregistrée dans la base de données est hors de l'empreinte au sol mais suffisamment proche de celle-ci pour que le navire ait pu y entrer depuis le temps qui s'est écoulé depuis que la position a été détectée.

Pour chaque émetteur SIA susceptible d'avoir émis un message SIA contenu dans les données numériques, on compose un ou plusieurs messages fragmentaires hypothétiques, qui comprennent des bits prédictibles sur la base des informations contenues dans la base de données 26 (étape E16). Ensuite, on cherche des messages candidats dans les données numériques par corrélation de celles-ci avec les messages fragmentaires hypothétiques (étape E18). Ces étapes seront décrites plus en détail dans la suite.

Une fois un message candidat identifié dans les données numériques, on décode (à l'étape E20) ses parties inconnues (c.-à-d. les séquences de bits non prédictibles avec suffisamment de certitude). Le décodage des parties inconnues peut se faire de manière classique, p.ex. à l'aide de l'algorithme de Viterbi. Les informations contenues dans les messages décodées sont ensuite utilisées pour mettre à jour la base de données 26 (étape E22).

On continue le procédé avec la suite des données numériques. Au fur et à mesure que la position du satellite change, on identifie les nouveaux émetteurs SIA qui entrent dans l'empreinte au sol du satellite et ceux qui en sortent.

Les abonnés de la base de données peuvent y accéder, et notamment se faire afficher une cartographie des émetteurs SIA (étape E24).

Quand un émetteur SIA a quitté l'empreinte au sol du satellite, il reste inobservé jusqu'au prochain passage du même ou d'un autre satellite du système de détection de messages SIA par satellite. Avec une constellation de quatre satellites OTB, on peut arriver à des temps d'inobservation locale de l'ordre de 2 heures. Cela signifie que les données stockées pour un émetteur qui entre dans l'empreinte au sol d'un satellite sont vieilles, en moyenne, de 2 heures. Pour la composition des messages fragmentaires hypothétiques, il est préférable de tenir compte de cette période. Il convient éventuellement de tester plusieurs hypothèses pour identifier un message candidat dans les données numériques. On peut tester ces hypothèses en parallèle et/ou en série. Si on choisit la variante en série, il convient de démarrer avec l'hypothèse la plus probable et, en cas d'échec de la détection, de continuer avec les hypothèses suivantes selon la probabilité décroissante.

Par exemple, pour un émetteur SIA donné, dont le dernier état de navigation stocké dans la base de données indique que l'émetteur était mobile, on essaye de préférence de détecter un message SIA de type 1 : le message fragmentaire hypothétique à corréler avec les données numériques est configuré en conséquence. En cas d'échec (c.-à-d. si on n'arrive pas à détecter un pic de corrélation), on peut essayer de détecter un message SIA de type 3 du même émetteur avec la même hypothèse de temps et de fréquence. Si on cherche un émetteur SIA, dont le dernier état de navigation stocké dans la base de données indique que l'émetteur était immobile, on essaye plutôt de détecter d'abord un message SIA de type 3 . En cas d'échec, on peut essayer de détecter un message SIA de type 1 du même émetteur avec la même hypothèse de temps et de fréquence. En parallèle, on essaye de préférence de détecter des messages de type 5 de tous les émetteurs supposés présents dans la zone géographique couverte.

Le tableau suivant indique les bits prédictibles pour les messages SIA de type 1, 2 ou 3. De manière générale, le nombre de bits prédictibles dépend de la complexité du modèle utilisé pour la prédiction ainsi que de la fraîcheur de la base de données au moment de la prédiction. Les bits des champs spécifiques à l'émetteur « statiques » peuvent généralement être tous prédits. Par contre, pour les champs spécifiques à l'émetteur « dynamiques », qui sont susceptibles de changer d'un message à l'autre, la fraîcheur de la base de données est déterminante pour savoir combien de bits de ces champs peuvent être prédits.

| Champ | Nombre de bits | Nombre de bits connus |
|---|---|---|
| Montée en puissance | 8 | 8 |
| Séquence de conditionnement | 24 | 24 |
| Fanion de début | 8 | 8 |
| *Début de la séquence de données* | | |
| ID message | 6 | 6, si on suppose qu'on cherche un message d'un certain type |
| Indicateur de répétition | 2 | 2 (valeur par défaut = 0) |
| ID utilisateur | 30 | 30 |
| Statut de navigation | 4 | 1 (le bit de poids fort est connu si on suppose que le statut de navigation est < 8, ce qui est le cas pour un navire immobilisé) |
| Vitesse angulaire de virage $ROT_{SIA}$ | 8 | 0-8, en fonction du modèle et de la fraîcheur de la base de données |
| Vitesse de fond | 10 | 0-10, en fonction du modèle et de la fraîcheur de la base de données 7 pour un navire immobilisé, car la vitesse < 1 noeud |
| Précision de position | 1 | 0-1, en fonction du modèle et de la fraîcheur de la base de données |
| Longitude | 28 | 9 pour une prédiction de la position avec une incertitude de 100 km (cas le plus défavorbale) ; 23 pour une prédiction de la position avec une incertitude de 10 m |
| Latitude | 27 | 8 pour une prédiction de la position avec une incertitude de 100 km (cas le plus défavorbale) ; 22 pour une prédiction de la position avec une incertitude de 10 m |
| Route de fond | 12 | 0-12, en fonction du modèle et de la fraîcheur de la base de données 12 pour un navire immobilisé |
| Cap vrai | 9 | 0-9, en fonction du modèle et de la fraîcheur de la base de données |
| Horodatage | 6 | 6 (grâce à l'horodatage des données numériques avec une précision de 1 ms) |
| Indicateur de manoeuvre particulière | 2 | 0-2, en fonction du modèle et de la fraîcheur de la base de données |
| Réservé | 3 | 3 (valeur par défaut) |
| Fanion RAIM | 1 | 0-1, en fonction du modèle et de la fraîcheur de la base de données |
| Etat de communication | 19 | 19 pour un navire immobilisé (en l'état de communication AMRTAO) ; 19 pour les sous-messages 1, 2, 4 et 6 ; 0-19, pour les sous-messages 0, 3, 5, et 7 (en fonction du modèle et de la fraîcheur de la base de données - le modère doit dans ce cas être capable d'estimer le nombre de navires dans les environs) |
| *Fin de la séquence de données* | | |
| Séquence de vérification de trame | 16 | 0 |
| Fanion de fin | 8 | 8 |
| Tampon | 24 | 0 |

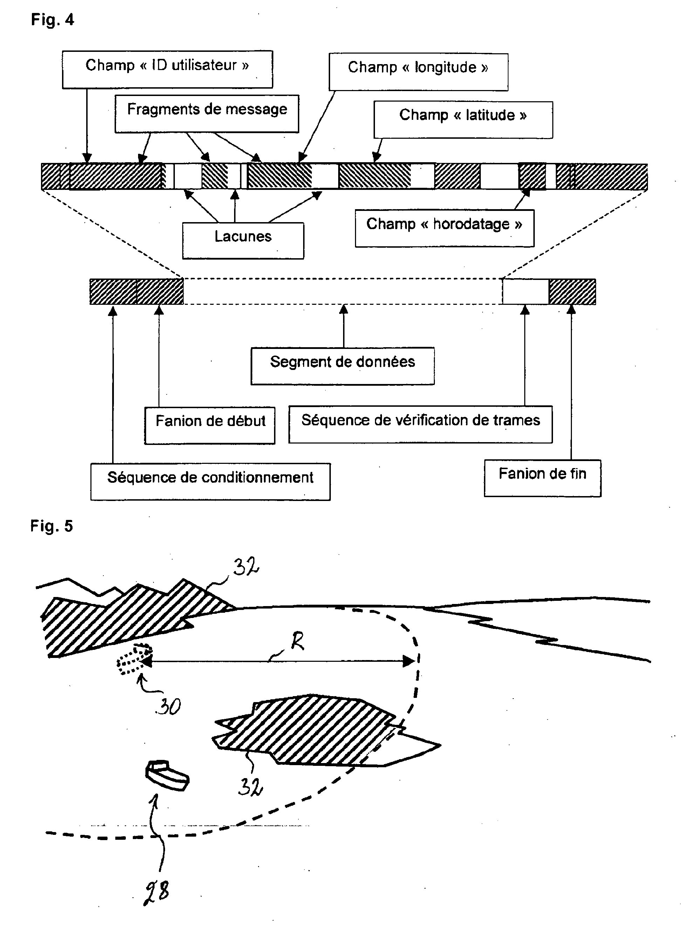

La figure 4 est une illustration d'un message fragmentaire hypothétique pour détecter un message SIA du type 1 d'un navire immobilisé (amarré ou au mouillage) dont l'émetteur SIA est en l'état de communication AMRTAO. Les séquences de bits prédictibles (fragments de message) sont indiqués en hachuré. On note que les séquences de bits prédictibles peuvent s'étendre sur plusieurs champs. Pour certains champs, par exemple les champs « longitude » et « latitude », seulement une partie des bits sont prédictibles avec une certitude suffisante.

Le tableau suivant indique les bits prédictibles pour les messages SIA de type 4 (émis par des stations de base fixes):

| Champ | Nombre de bits | Nombre de bits connus |
|---|---|---|
| Montée en puissance | 8 | 8 |
| Séquence de conditionnement | 24 | 24 |
| Fanion de début | 8 | 8 |
| *Début de la séquence de données* | | |
| ID message | 6 | 6, si on suppose qu'on cherche un message de type 4 |
| Indicateur de répétition | 2 | 2 (valeur par défaut = 0) |
| ID utilisateur | 30 | 30 |
| Année UTC | 14 | 14 |
| Mois UTC | 4 | 4 |
| Jour UTC | 5 | 5 |
| Heure UTC | 5 | 5 |
| Minute UTC | 6 | 6 |
| Seconde UTC | 6 | 6 |
| Précision de position | 1 | 0-1 en fonction du modèle et de la fraîcheur de la base de données |
| Longitude | 28 | 23 pour une prédiction de la position avec une incertitude de 10 m |
| Latitude | 27 | 22 pour une prédiction de la position avec une incertitude de 10 m |
| Type de dispositif électronique de détermination de la position | 4 | 4 |
| Contrôle de l'émission du message de radiodiffusion générale longue distance | 1 | 1 (si on assume la valeur par défaut) |
| Réservé | 9 | 9 |
| Fanion RAIM | 1 | 0-1, en fonction du modèle et de la fraîcheur de la base de données |
| Etat de communication | 19 | 0-19, en fonction du modèle et de la fraîcheur de la base de données |
| *Fin de la séquence de données* | | |
| Séquence de vérification de trame | 16 | 0 |
| Fanion de fin | 8 | 8 |
| Tampon | 24 | 0 |

Le tableau suivant indique les bits prédictibles pour les messages SIA de type 5 (qui s'étend sur deux intervalles de temps consécutifs dans une trame SIA):

| Champ | Nombre de bits | Nombre de bits connus |
|---|---|---|
| Montée en puissance | 8 | 8 |
| Séquence de conditionnement | 24 | 24 |
| Fanion de début | 8 | 8 |
| *Début de la séquence de données* | | |
| ID message | 6 | 6, si on suppose qu'on cherche un message de type 5 |
| Indicateur de répétition | 2 | 2 (valeur par défaut = 0) |
| ID utilisateur | 30 | 30 |
| Numéro OMI | 30 | 30 |
| Indicatif d'appel | 42 | 42 |
| Nom | 120 | 120 |
| Type de navire et type de cargaison | 8 | 8 |
| Dimensions générales/ référence pour position | 30 | 30 |
| Type de dispositif électronique de détermination de la position | 4 | 4 |
| Heure estimée d'arrivée | 20 | 0-20, en fonction du modèle et de la fraîcheur de la base de données ;<br>9 si l'année, le mois et le jour de l'arrivée sont connus<br>>9 si l'heure d'arrivée est aussi connue |
| Tirant d'eau statique actuel maximal | 8 | 0-8, en fonction du modèle et de la fraîcheur de la base de données |
| Destination | 120 | 120 (sauf en cas de changement de destination) |
| Indicateur d'équipement terminal | 1 | 0-1, en fonction du modèle et de la fraîcheur de la base de données |
| de données | | |
| Réservé | 1 | 1 |
| *Fin de la séquence de données* | | |
| Séquence de vérification de trame | 16 | 0 |
| Fanion de fin | 8 | 8 |
| Tampon | 24 | 0 |

Le tableau suivant indique les bits prédictibles pour les messages SIA de type 21 (diffusé par une station d'aide à la navigation ; s'étend sur deux intervalles de temps consécutifs dans une trame SIA) :

| Champ | Nombre de bits | Nombre de bits connus |
|---|---|---|
| Montée en puissance | 8 | 8 |
| Séquence de conditionnement | 24 | 24 |
| Fanion de début | 8 | 8 |

(suite)

| Début de la séquence de données | | |
|---|---|---|
| ID message | 6 | 6, si on suppose qu'on cherche un message de type 21 |
| Indicateur de répétition | 2 | 2 (valeur par défaut = 0) |
| ID utilisateur | 30 | 30 |
| Type d'aide à la navigation | 5 | 5 |
| Nom de l'aide à la navigation | 120 | 120 |
| Longitude | 28 | 23 (précision de 10 m) |
| Latitude | 27 | 22 (précision de 10 m) |
| Dimension/référence pour la position | 30 | 30 |
| Type de dispositif électronique de détermination de la position | 4 | 4 |
| Horodatage | 6 | 6 |
| Indicateur hors position | 1 | 0-1, en fonction du modèle et de la fraîcheur de la base de données |
| Statut de l'aide à la navigation | 8 | 0-8, en fonction du modèle et de la fraîcheur de la base de données |
| Fanion RAIM | 1 | 0-1, en fonction du modèle et de la fraîcheur de la base de données |
| Fanion mode attribuée | 1 | 0-1, en fonction du modèle et de la fraîcheur de la base de données |
| Réservé | 1 | 1 |
| Nom de l'extension de l'aide à la navigation | 0, 6, 12, 18, 24, 30, 36, ... 84 | 0, 6, 12, 18, 24, 30, 36, ... 84 |
| Réservé | 0, 2, 4 ou 6 | 0, 2, 4 ou 6 |
| Fin de la séquence de données | | |
| Séquence de vérification de trame | 16 | 0 |
| Fanion de fin | 8 | 8 |
| Tampon | 24 | 0 |

On note donc que chaque message SIA commence par une séquence de bits prédictibles si l'émetteur SIA est connu. Cette séquence de bits, représentant un premier fragment du message fragmentaire hypothétique, comprend notamment les champs « séquence de conditionnement », « fanion de début », « ID message », « indicateur de répétition » et « ID utilisateur », soit au moins 70 bits. Selon le type de message que l'on essaye d'identifier, ce premier fragment de message peut être significativement plus long (110 bits pour un message de type 4, 306 bits pour un message de type 5).

Dans les tableaux ci-dessus, on n'a pas tenu compte de bits de bourrage éventuels. Dans chaque message SIA, des bits de bourrage sont automatiquement insérés dans la séquence de données et dans la séquence de vérification de trame pour éviter l'apparition d'une séquence de bits identique au fanion de fin de message (c.-à-d. la séquence de bits [01111110]). Côté émetteur SIA, cela signifie que, si dans le flux binaire de sortie il y a plus de cinq bits de valeur 1 consécutifs, un bit de valeur 0 sera inséré après ces cinq bits de valeur 1 consécutifs. Côté réception, il faudra supprimer le premier bit de valeur 0 arrivant après cinq bits de valeur 1 consécutifs. Les bits de bourrage pourront rallonger les parties connues du message à détecter mais aussi ses parties inconnues. Pour couvrir les différents cas possibles, on doit donc varier la longueur des lacunes (des parties inconnues) à l'intérieur des messages fragmentaires hypothétiques que l'on corrèle avec les données numériques.

Les messages fragmentaires hypothétiques comprennent au moins un fragment de message dépendant du temps d'émission (par exemple le champ « horodatage » des messages de type, 1, 2, 3 ou 21) et/ou de la position de l'émetteur SIA (par exemple les champs « longitude » et « latitude » des messages de type 1, 2, 3, 4 et 21). Pour estimer (prédire) les bits de fragments de message dépendant de la position de l'émetteur, on tient compte de la dernière position connue (c.-à-d. stockée dans la base de données) de l'émetteur SIA concerné. Plusieurs scénarios sont possibles. Avantageusement, on suppose qu'entre le dernier message SIA décodé d'un émetteur spécifique et un message SIA du même émetteur à identifier, l'état de navigation n'a pas changé. Cette hypothèse n'est certainement pas vraie dans tous les cas, mais elle est très probable pour les temps d'inobservation considérés (quelques heures au plus). Ainsi, si la base de données indique que le navire est amarré ou au mouillage, le message fragmentaire sera composé sur l'hypothèse que la position du navire est restée la même (à 10 m près). Si un pic de corrélation ne peut pas être détecté, on supposera que le navire s'est mis en route. Cette hypothèse est par ailleurs testée en premier lieu si le dernier état de navigation du navire indique qu'il est en route. Dans ce cas, illustré à la figure 5, la nouvelle position du navire 28, qui est a priori inconnue, doit se trouver dans un cercle autour de la dernière position connue 30, le rayon du cercle R étant le produit du temps $\Delta T$ écoulé depuis le dernier message SIA décodé et de la vitesse maximale $v_{max}$ du navire : $R = \Delta T \cdot v_{max}$. La vitesse maximale du navire peut être extraite de la base de données si elle y est stockée. Si la vitesse maximale n'est pas connue, on peut supposer qu'elle ne dépasse pas une certaine valeur seuil (p.ex. 50 km/h). Des zones de terre ferme 32 à l'intérieur du cercle trouvé peuvent être exclues. (Si le navire en question est un bateau fluvial, les voies navigables ne doivent évidemment pas être exclues.) Pour une précision de la nouvelle position de R = 100 km, 9, respectivement 8 bits des champs « longitude » et « latitude » peuvent être prédits. La prédiction de position peut être raffinée si des informations supplémentaires sur le navire sont disponibles dans la base de données, notamment les champs « Type de navire et type de cargaison », « heure estimée d'arrivée » et « destination » du message SIA de type 5. Par exemple, si l'on sait que le navire en question est un ferry, dont les routes empruntées dans le passé sont connues, il est très probable de retrouver le navire sur une de ces routes, ce qui réduit fortement la zone d'incertitude de position. Si l'heure estimée d'arrivée et le port de destination son connus, cela permet aussi de faire des prédictions sur la route suivie par le navire.

Une réalisation préférée de l'étape de recherche de messages candidats dans les données numériques (étape E18) est maintenant décrite avec plus de détails. Il convient de noter que les données numériques sont uniquement corrélées avec les segments de bits prédits (fragments de message). Les bits inconnus (les lacunes entre les différents fragments de message) ne sont pas corrélés avec les données numériques des signaux SIA. Grâce à la synchronisation des données numériques sur le temps UTC et à la connaissance au moins approximative de la position des émetteurs SIA, on peut calculer le temps de propagation des messages SIA de chaque émetteur. Comme chaque émetteur SIA synchronise (directement ou indirectement) ses messages sur le temps UTC, on connaît, en tenant compte du temps de propagation, les instants auxquels peuvent débuter les messages SIA d'un émetteur donné avec une précision de $\pm$ 6 bits (plage d'incertitude temporelle). La plage d'incertitude temporelle se compose de la gigue de synchronisation SIA ($\pm$ 312 $\mu$s correspondant à $\pm$ 3 bits) augmentée d'un certain tampon pour tenir compte de l'incertitude de la position du navire. Pour les corrélations, la plage de recherche temporelle correspond à la plage d'incertitude temporelle (soit 12 bits). Les corrélations sont réalisées à chaque début d'intervalle de temps de la trame SIA.

Pour tenir compte de l'effet Doppler et de l'erreur relative à la fréquence de la porteuse de l'émetteur, le procédé de corrélation est réalisé sur une plage de recherche en fréquence autour de la fréquence porteuse. Si on cherche un message SIA d'un émetteur dont l'erreur relative à la fréquence de la porteuse est contenue dans la base de données, on peut compenser cette erreur et l'incertitude dans le domaine des fréquences résiduelle est celle du décalage Doppler uniquement (normalement $\pm$ 100 Hz). L'intervalle de recherche en fréquence sera donc typiquement large de 200 Hz.

Si on varie le décalage entre le message fragmentaire hypothétique et les données numériques entre chaque intégration d'un demi-bit, chaque opération de corrélation comprendra 24 intégrations. Si on divise l'intervalle de recherche en fréquence en 8 cellules (de 25 Hz de largeur), on aura en tout 192 intégrations par cellule dans l'espace de recherche temps/fréquence (sans compter les différentes hypothèses pour l'indice de modulation, voir en bas). On notera que la largeur des cellules en fréquence est de préférence choisie de sorte à pouvoir détecter le pic principal de la corrélation sur l'axe des fréquences de manière univoque.

Une fois le décalage par rapport à la fréquence de la porteuse trouvée, on pourra retrancher le décalage Doppler théorique. L'erreur résiduelle peut être utilisée pour corriger l'erreur relative à la fréquence de la porteuse, stockée dans la base de données.

Pour chaque cellule de l'espace de recherche temps/fréquence, le procédé de corrélation, pour une hypothèse de l'indice de modulation, comprend de préférence les étapes suivantes :

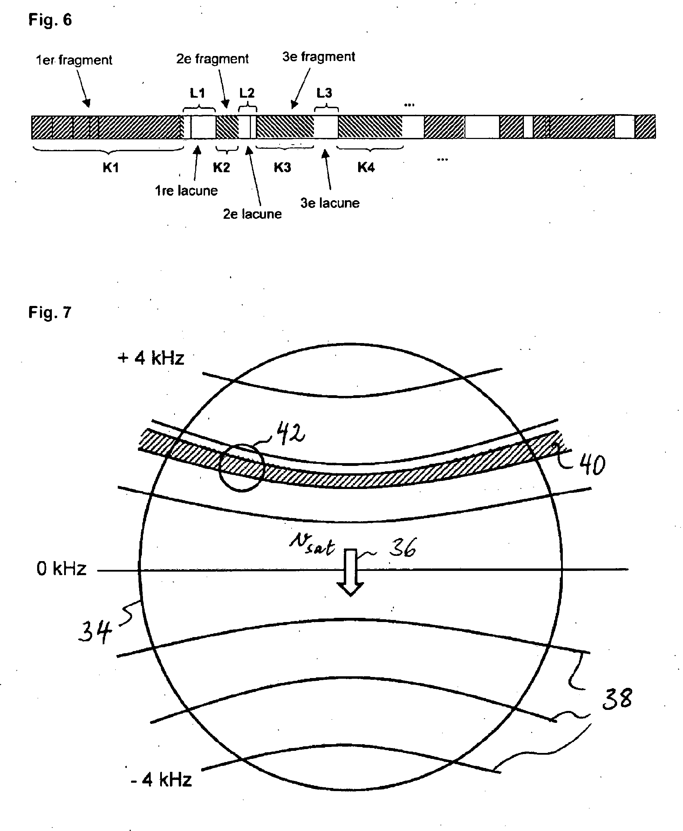

a. Corrélation des données numériques avec le premier fragment de message (à K1 bits connus, voir Fig.6) en utilisant les deux phases possibles (les données étant codées NRZI). On obtient deux résultats de corrélation à l'étape a.

b. Corrélation des données numériques avec le deuxième fragment de message (à K2 bits connus). Pour tenir compte d'éventuels bits de bourrage dans la première lacune (les bits inconnus entre le premier et le deuxième fragment), le début de la corrélation doit être positionné à différentes distances du premier fragment. Le nombre de bits inconnus de la première lacune est connu (L1). La longueur de la première lacune sera donc L1 plus le nombre de bits de bourrage. Ce dernier n'étant pas connu, il faut essayer les différentes longueurs de lacune possibles (L1, L1+1, ..., L1+B1, où B1 est le nombre maximal de bits de bourrage dans une séquence de L1 bits). Chaque corrélation doit aussi être faite pour les deux phases possibles pour tenir compte du codage NRZI. On obtient 2·B1 résultats de corrélation l'étape b.

c. Corrélation des données numériques avec le troisième fragment de message (à K3 bits connus). Pour tenir compte d'éventuels bits de bourrage dans la deuxième lacune (les bits inconnus entre le deuxième et le troisième fragment), le début de la corrélation doit être positionné à différentes distances du deuxième fragment. Le nombre de bits inconnus de la deuxième lacune est connu (L2). La longueur de la deuxième lacune sera donc L2 plus le nombre de bits de bourrage. Ce dernier n'étant pas connu, il faut essayer les différentes longueurs de lacune possibles (L1, L1+1, ..., L1+B2, où B2 est le nombre maximal de bits de bourrage dans une séquence de L2 bits). Chaque corrélation doit aussi être faite pour les deux phases possibles pour tenir compte du codage NRZI. On obtient 2·B2 résultats de corrélation à l'étape c.

d. Et ainsi de suite.

e. Si on adopte un traitement en parallèle, les résultats des différentes corrélations doivent être additionnés selon les combinaisons des étapes a., b., c. et d. possibles. Le nombre d'hypothèses testées s'élève donc à 2·(2·B1) (2·B2)...

f. Parmi toutes les hypothèses testées, on cherche celle qui présente le pic de corrélation (sur l'ensemble des fragments) le plus élevé. Pour une détection positive, il faut en outre que le pic de corrélation dépasse un certain seuil (par rapport au bruit) prédéfini par analyse et consolidé de manière empirique.

Au lieu de tester toutes les hypothèses (toutes les combinaisons possibles), on peut, pour chaque fragment de message, ne retenir aux étapes a., b., c et d. que l'hypothèse ayant généré le pic de corrélation le plus élevé. Cette option possède un risque plus élevé de ne pas aboutir à la bonne combinaison de fragments. Pour atténuer cet inconvénient, au fur et à mesure que l'on progresse dans les étapes a., b., c et d., on peut retenir un nombre limité de combinaisons présentant les pics de corrélation les plus élevés et écarter les autres combinaisons.

Avantageusement, le satellite OTB comprend un groupe d'antennes élémentaires (formant une antenne réseau à commande de phase) qui reçoivent chacune les signaux SIA. Les données numériques obtenues par conversion des signaux reçus aux différentes antennes peuvent alors être combinées entre elles pour obtenir une directivité voulue du groupe d'antennes. Dans ce cas, on peut réduire de manière artificielle la zone couverte par le groupe d'antennes au niveau de la mer et ainsi réduire le nombre d'émetteurs SIA (et le nombre de messages en collision) à considérer à la fois. Autrement dit : on augmente la sensibilité de l'antenne pour une certaine zone géographique tandis que l'on la réduit à l'extérieur de cette zone. On peut alors balayer l'empreinte au sol du groupe d'antennes en changeant les relations de phase entre les différents flux de données numériques. Cette technique sélective en fréquence (cellules fréquentielles étroites) permet de réduire de manière significative la puissance des signaux interférents.

La figure 7 montre, de manière schématique, l'empreinte au sol 34 du groupe d'antennes du satellite. Le satellite se déplace à une vitesse $V_{sat}$ (indiquée par la flèche 36), ce qui provoque un décalage Doppler des signaux SIA reçus par le satellite. Les lignes d'iso-Doppler sont indiquées par le numéro de référence 38. La bande hachurée 40 correspond à une cellule de fréquences. Grâce à l'antenne réseau à commande de phase, la zone de détection peut être réduite à une zone locale 42 substantiellement plus petite que l'empreinte au sol 34. On peut alors essayer de détecter les messages SIA de navires susceptibles de se trouver dans cette zone locale 42 d'après leur dernière position enregistrée dans la base de données. A l'intérieur de la zone locale 42, l'envergure des décalages Doppler est nettement inférieure par rapport à l'empreinte au sol 34, ce qui réduit considérablement le nombre de cellules de fréquences à tester pour chaque zone locale 42.

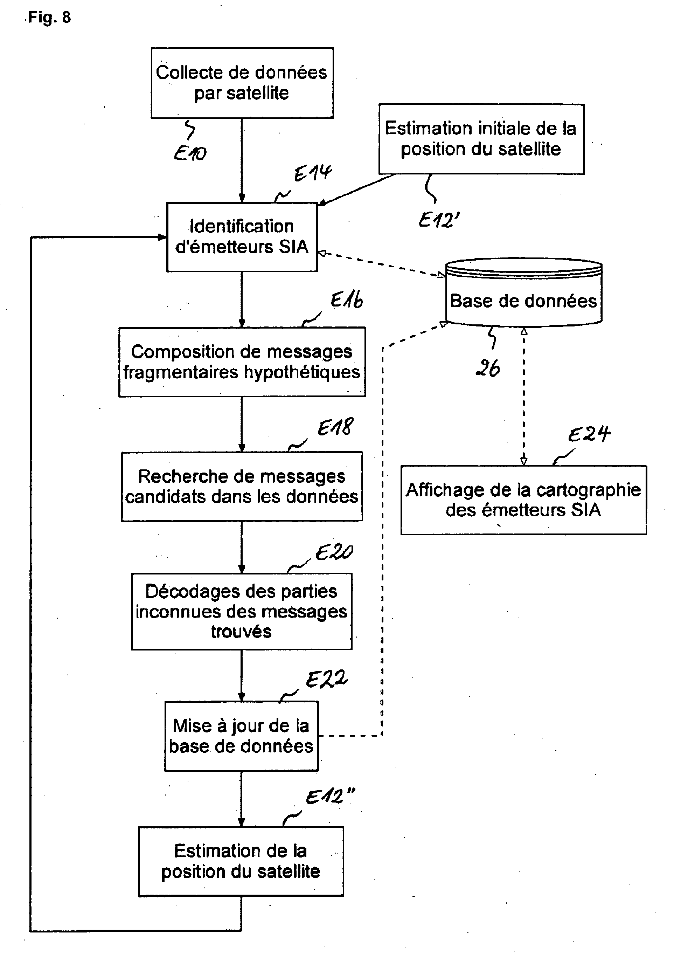

La figure 8 montre le schéma de principe du procédé inventif selon un deuxième mode d'exécution préféré. Les étapes identiques ou similaires à celles du procédé de la figure ont été désignées par le même numéro de référence. Comme dans l'exemple précédent, les données sont collectées au niveau du satellite OTB (étape E10). Les données numériques horodatées sont transmises au centre de calcul. La principale différence par rapport au procédé de la figure 3 réside dans le fait que la position du satellite est obtenue par triangulation par relevé de distances par rapport aux positions des émetteurs dont des messages SIA sont identifiés dans les données numériques. Cette variante de l'invention est intéressante si le satellite OTB n'est pas équipé d'un système de géopositionnement, si ce système est défaillant, ou si les données orbitales concernant le satellite ne sont pas communiquées par le centre de contrôle.

Pour démarrer le procédé, on identifie les émetteurs SIA susceptibles d'avoir émis un message SIA contenu dans les données numériques (étape E14). De préférence, on dispose à cette étape d'une estimation initiale de la position du satellite (trouvée à étape E12') afin de pouvoir réduire les possibilités initiales. Si une estimation initiale de la position du satellite n'est pas disponible, on peut essayer de détecter un premier message SIA dans les donnés numériques de manière classique (en n'utilisant que la partie statique commune à tous les messages SIA pour la corrélation). Après décodage du premier message SIA, on connaît la position d'un premier émetteur SIA reçu, qui peut alors servir d'estimée grossière de la position du satellite. Ensuite, on essaye de retrouver dans les données numériques des messages de navires dans les environs du premier émetteur trouvé (en suivant les étapes E16, E18 et E20 discutées plus haut). Dès qu'au moins quatre messages SIA (de différents émetteurs) auront été détectés, la position du satellite peut être estimée (étape E12") par résolution du système d'équations suivant :

$$c \cdot T_A = \left| \vec{x}_{sat}(T_A) - \vec{x}_{\acute{e}me\_A} \right| + c \cdot (T_{\acute{e}mission\_A\_UTC} - \delta_{sat-UTC}(T_A))$$

$$c \cdot T_B = \left| \vec{x}_{sat}(T_B) - \vec{x}_{\acute{e}me\_B} \right| + c \cdot (T_{\acute{e}mission\_B\_UTC} - \delta_{sat-UTC}(T_B))$$

$$c \cdot T_C = \left| \vec{x}_{sat}(T_C) - \vec{x}_{\acute{e}me\_C} \right| + c \cdot (T_{\acute{e}mission\_C\_UTC} - \delta_{sat-UTC}(T_C))$$

$$c \cdot T_D = \left| \vec{x}_{sat}(T_D) - \vec{x}_{\acute{e}me\_D} \right| + c \cdot (T_{\acute{e}mission\_D\_UTC} - \delta_{sat-UTC}(T_D))$$

où $T_i$, i=A,..., D, est l'instant de réception du message de l'émetteur i dans le référentiel de temps du satellite (horloge satellite), c est la vitesse de la lumière, $\vec{x}_{sat}(T_i)$ est la position du satellite à l'instant $T_i$, $\vec{x}_{\acute{e}me\_i}$ est la position de l'émetteur i, $T_{\acute{e}mission\_i\_UTC}$ est le temps d'émission du message de l'émetteur i dans le référentiel UTC et $\delta_{sat-UTC}$ (t) est le biais entre le référentiel de temps du satellite et du référentiel UTC. Les temps $T_{\acute{e}mission\_i\_UTC}$ sont connus à cause de la synchronisation de la trame SIA sur le temps UTC. Les positions $\vec{x}_{\acute{e}me\_i}$, i=A, ..., D, sont connues car la position du navire est indiquée dans le message SIA. On peut supposer qu'entre les quatre mesures l'horloge satellite est stable et présente donc un biais constant par rapport au temps UTC et que la position du satellite est la même pour les instants $T_i$, i=A,..., D, avec une erreur typiquement inférieure à 100m. En posant $T_m = \frac{1}{4} (T_A + T_B + T_C + T_D)$, on obtient ainsi :

$$c \cdot T_A = \left| \vec{x}_{sat}(T_m) - \vec{x}_{\acute{e}me\_A} \right| + c \cdot (T_{\acute{e}mission\_A\_UTC} - \delta_{sat-UTC}(T_m))$$

$$c \cdot T_B = \left| \vec{x}_{sat}(T_m) - \vec{x}_{\acute{e}me\_B} \right| + c \cdot (T_{\acute{e}mission\_B\_UTC} - \delta_{sat-UTC}(T_m))$$

$$c \cdot T_C = \left| \vec{x}_{sat}(T_m) - \vec{x}_{\acute{e}me\_C} \right| + c \cdot (T_{\acute{e}mission\_C\_UTC} - \delta_{sat-UTC}(T_m))$$

$$c \cdot T_D = \left| \vec{x}_{sat}(T_m) - \vec{x}_{\acute{e}me\_D} \right| + c \cdot (T_{\acute{e}mission\_D\_UTC} - \delta_{sat-UTC}(T_m))$$

On peut résoudre ce système pour trouver les inconnues $\vec{x}_{sat}(T_m)$ et $\delta_{sat-UTC}(T_m)$. Si en prend plus de quatre messages en considération, on peut augmenter la précision de la détermination de la position. On utilisera de préférence une méthode des moindres carrés ou un filtre de Kalman basé sur une modélisation mathématique de l'orbite du satellite.
Avec la position de satellite ainsi trouvée, on peut identifier avec une meilleure précision les émetteurs SIA susceptibles d'avoir émis un message reçu par le satellite et donc contenu dans les données numériques. On peut alors continuer la recherche de messages dans les données déjà traitées et dans la suite des données numériques.

La mise à jour de la base de données est effectuée comme dans l'exemple de la figure 3.

**Légende:**

| | |
|---|---|
| 10 | Navire |
| 12 | Emetteur/récepteur SIA |
| 14 | Satellite OTB |
| 16 | Station au sol |
| 18 | Centre de contrôle |
| 20 | Satellites GNSS |
| 22 | Trajectoire du satellite OTB |
| 24 | Signaux de radionavigation |
| 26 | Base de données |
| 28 | Nouvelle position du navire |
| 30 | Dernière position du navire |
| 32 | Zone de terre ferme |
| 34 | Empreinte au sol |
| 36 | Flèche représentant $V_{sat}$ |
| 38 | Lignes d'iso-Doppler |
| 40 | Bande hachurée correspondant à une cellule de fréquences |
| 42 | Zone locale |
| E10 | Etape de collecte de données |
| E12 | Etape de détermination de la trajectoire du satellite |
| E12' | Etape d'estimation initiale de la position du satellite |
| E12" | Etape d'estimation de la position du satellite |
| E14 | Etape d'identification d'émetteurs SIA |
| E16 | Etape de composition de messages fragmentaires hypothétiques |
| E18 | Etape de recherche de messages candidats dans les données numériques |
| E20 | Etape de décodage des parties inconnues des messages trouvés |
| E22 | Etape de mise à jour de la base de données |
| E24 | Etape d'affichage de la cartographie des émetteurs SIA |
| R | Rayon |

**Revendications**

1. Procédé de détection de messages SIA, comprenant
   la mise à disposition de données numériques représentant des signaux reçus par un satellite sur au moins un canal SIA ;
   l'identification d'un message candidat dans les données numériques (E18) par corrélation des données numériques avec un message fragmentaire hypothétique ;
   **caractérisé en ce que** le message fragmentaire hypothétique comprend au moins un fragment de message SIA qui dépend du temps d'émission et/ou de la position de l'émetteur et qui est déterminé à l'aide d'une base de données d'émetteurs SIA (26).

2. Procédé selon la revendication 1, **caractérisé en ce que** le message fragmentaire hypothétique comprend au moins un fragment de message SIA dépendant de la position de l'émetteur et **en ce que** la composition du message fragmentaire hypothétique comprend :

   l'identification, à partir de la base de données d'émetteurs SIA, d'un émetteur SIA localisé dans une zone desservie par le satellite au moment de la réception des signaux (E14) ;
   la détermination de l'au moins un fragment de message SIA dépendant de la position de l'émetteur sur la base d'une position de l'émetteur identifié stockée dans la base de données.

3.  Procédé selon la revendication 2, **caractérisé en ce que** l'au moins un fragment de message SIA dépendant de la position de l'émetteur comprend des bits de poids fort du champ « longitude » et/ou des bits de poids fort du champ « latitude ».

4.  Procédé selon l'une quelconque des revendications 1 à 3, **caractérisé en ce que** les données numériques sont horodatées, **en ce que** le message fragmentaire hypothétique comprend un ou plusieurs fragments de message SIA dépendant du temps d'émission et **en ce que** la composition du message fragmentaire hypothétique comprend la détermination de l'au moins un fragment de message SIA dépendant du temps d'émission sur la base de l'horodatage des données numériques.

5.  Procédé selon la revendication 4, **caractérisé en ce que** l'au moins un fragment de message SIA dépendant du temps d'émission comprend des bits du champ « horodatage » ou des bits des champs « Année UTC », « Mois UTC », « Jour UTC », « Heure UTC », « Minute UTC » et/ou « Seconde UTC ».

6.  Procédé selon l'une quelconque des revendications 1 à 5, **caractérisé en ce que** le message fragmentaire hypothétique comprend des bits d'un ou de plusieurs champs statiques spécifiques à l'émetteur identifié dans la base de données, par exemple le champ « ID utilisateur », le champ « indicateur de la version du SIA », le champ « numéro OMI », le champ « Indicatif d'appel », le champ « nom », le champ « type de navire et type de cargaison », le champ « dimensions générales/référence pour position », le champ « type de dispositif électronique de détermination de la position ».

7.  Procédé selon l'une quelconque des revendications 1 à 6, **caractérisé en ce que** le message fragmentaire hypothétique comprend des bits d'un ou de plusieurs champs dynamiques spécifiques à l'émetteur identifié dans la base de données, par exemple le champ « fanion RAIM », le champ « indicateur de manoeuvre particulière », le champ « heure estimée d'arrivée », le champ « tirant d'eau actuel », le champs « destination », le champs « statut de navigation », le champ « route de fond », le champ « vitesse de fond », et/ou le champ « état de communication »

8.  Procédé selon l'une quelconque des revendications 1 à 7, **caractérisé en ce qu'**après l'identification d'un message candidat dans les données numériques, le message candidat est décodé (E20), et **en ce que** des informations contenues dans le message décodé sont utilisées pour mettre à jour ladite base de données d'émetteurs SIA (E22).

9.  Procédé selon l'une quelconque des revendications 1 à 8, **caractérisé en ce que** l'identification du message candidat (E18) est réalisée par corrélation des données numériques avec plusieurs messages fragmentaires hypothétiques, les différentes corrélations étant calculées en série et/ou en parallèle.

10. Procédé selon la revendication 9, **caractérisé en ce que** les messages fragmentaires hypothétiques sont conçus de sorte à tester la présence ou l'absence de bits de bourrage dans le message candidat.

11. Procédé selon l'une quelconque des revendications 1 à 10, **caractérisé en ce que** la position du satellite au moment de la réception de signaux est estimée (E12") par triangulation par rapport à des émetteurs dont un ou plusieurs messages SIA sont identifiés dans les données numériques.

12. Procédé selon l'une quelconque des revendications 1 à 11, **caractérisé en ce que** pour la corrélation des données numériques avec le message fragmentaire hypothétique, le début du message fragmentaire hypothétique est synchronisé avec un début d'intervalle de temps de la trame SIA.

13. Procédé selon l'une quelconque des revendications 1 à 12, **caractérisé en ce que** pour la corrélation des données numériques avec le message fragmentaire hypothétique, un décalage Doppler calculé pour le message fragmentaire hypothétique en fonction d'une position de l'émetteur est compensé et, optionnellement, **en ce qu'**il est tenu compte, pour la compensation du décalage Doppler, d'une erreur relative à la fréquence de la porteuse de l'émetteur, stockée dans ladite base de données (26).

14. Procédé selon l'une quelconque des revendications 1 à 13, **caractérisé en ce que** pour la corrélation des données numériques avec le message fragmentaire hypothétique, il est tenu compte de l'index de modulation de l'émetteur, stockée dans la base de données (26).

15. Produit de programme d'ordinateur, comprenant un support informatique contenant des instructions pouvant être exécutées par ordinateur, qui, lorsqu'elles sont exécutées par un ordinateur, font en sorte que l'ordinateur réalise le procédé selon l'une quelconque des revendications 1 à 14.

**Patentansprüche**

1. Erkennungsverfahren für Nachrichten des Typs AIS, das Folgendes aufweist:

   Bereitstellen von digitalen Daten, die Signale darstellen, welche über einen Satelliten auf mindestens einem AIS-Kanal empfangen wurden;
   Identifizieren einer Kandidatnachricht in den digitalen Daten (E18) durch Korrelation der digitalen Daten mit einer hypothetischen fragmentarischen Nachricht;
   **dadurch gekennzeichnet, dass** die hypothetische fragmentarische Nachricht mindestens ein AIS-Nachrichtenfragment aufweist, das von der Sendezeit und/oder der Position des Senders abhängt und das mittels einer Datenbank von AIS-Sendern (26) bestimmt wird.

2. Verfahren nach Anspruch 1, **dadurch gekennzeichnet, dass** die hypothetische fragmentarische Nachricht mindestens ein AIS-Nachrichtenfragment aufweist, das von der Position des Senders abhängt, und dass die Zusammensetzung der hypothetischen fragmentarischen Nachricht Folgendes aufweist:

   Identifizierung eines AIS-Senders der sich zum Zeitpunkt des Empfangs der Signale (E14) in einem von dem Satelliten abgedeckten Bereich befindet, anhand der AIS-Senderdatenbank;
   Bestimmung des mindestens einen AIS-Nachrichtenfragments in Abhängigkeit von der Position des Senders anhand einer Position des identifizierten Senders, die in der Datenbank gespeichert ist.

3. Verfahren nach Anspruch 2, **dadurch gekennzeichnet, dass** das mindestens eine, von der Position des Senders abhängige AIS-Nachrichtenfragment werthohe Bits des Datenfelds "Länge" und/oder werthohe Bits des Datenfelds "Breite" aufweist.

4. Verfahren nach einem der Ansprüche 1 bis 3, **dadurch gekennzeichnet, dass** die digitalen Daten mit einem Zeitstempel versehen sind, dass die hypothetische fragmentarische Nachricht ein oder mehrere AIS-Nachrichtenfragmente in Abhängigkeit von der Sendezeit aufweist, und dass die Zusammensetzung der hypothetischen fragmentarischen Nachricht die Bestimmung des mindestens einen AIS-Nachrichtenfragments in Abhängigkeit von der Sendezeit anhand des Zeitstempels der digitalen Daten aufweist.

5. Verfahren nach Anspruch 4, **dadurch gekennzeichnet, dass** das mindestens eine, von der Sendezeit abhängige AIS-Nachrichtenfragment Bits des Datenfelds "Zeitstempel" oder Bits des Datenfelds "Jahr UTC", "Monat UTC", "Tag UTC", "Stunde UTC", "Minute UTC" und/oder "Sekunde UTC" aufweist.

6. Verfahren nach einem der Ansprüche 1 bis 5, **dadurch gekennzeichnet, dass** die hypothetische fragmentarische Nachricht Bits von einem oder mehreren statischen Datenfeldern aufweist, die für den in der Datenbank identifizierten Sender spezifisch sind, zum Beispiel das Datenfeld "Nutzer-ID", das Datenfeld "Anzeige der AIS-Version", das Datenfeld "IMO-Nummer", das Datenfeld "Rufzeichen", das Datenfeld "Name", das Datenfeld "Schiffstyp und Frachttyp", das Datenfeld "Allgemeine Abmessungen/Referenz für die Position", das Datenfeld "Art der elektronischen Vorrichtung zur Positionsbestimmung".

7. Verfahren nach einem der Ansprüche 1 bis 6, **dadurch gekennzeichnet, dass** die hypothetische fragmentarische Nachricht Bits von einem oder mehreren dynamischen Datenfeldern aufweist, die für den in der Datenbank identifizierten Sender spezifisch sind, zum Beispiel das Datenfeld "RAIM-Anzeige", das Datenfeld "Anzeige des besonderen Manövers", das Datenfeld "geschätzte Ankunftszeit", das Datenfeld "aktueller Tiefgang", das Datenfeld "Bestimmungsort", das Datenfeld "Navigationsstatus", das Datenfeld "Kurs über Grund", das Datenfeld "Geschwindigkeit über Grund" und/oder das Datenfeld "Kommunikationsstatus".

8. Verfahren nach einem der Ansprüche 1 bis 7, **dadurch gekennzeichnet, dass** nach der Identifizierung einer Kandidatnachricht in den digitalen Daten die anstehende Nachricht entschlüsselt wird (E20) und dass die in der entschlüsselten Nachricht enthaltenen Informationen verwendet werden, um die Datenbank der AIS-Sender zu aktualisieren (E22).

9. Verfahren nach einem der Ansprüche 1 bis 8, **dadurch gekennzeichnet, dass** die Identifizierung der Kandidatnachricht (E18) durch Korrelation der digitalen Daten mit mehreren hypothetischen fragmentarischen Nachrichten realisiert wird, wobei die verschiedenen Korrelationen in Reihe und/oder parallel berechnet werden.

10. Verfahren nach Anspruch 9, **dadurch gekennzeichnet, dass** die hypothetischen fragmentarischen Nachrichten so verfasst sind, dass sie die Anwesenheit oder Abwesenheit von Stopfbits in der Kandidatnachricht testen.

11. Verfahren nach einem der Ansprüche 1 bis 10, **dadurch gekennzeichnet, dass** die Position des Satelliten zum Zeitpunkt des Empfangs von Signalen durch Triangulierung in Bezug auf die Sender geschätzt (E12") wird, von denen eine oder mehrere AIS-Nachrichten in den digitalen Daten identifiziert wurden.

12. Verfahren nach einem der Ansprüche 1 bis 11, **dadurch gekennzeichnet, dass** für die Korrelation der digitalen Daten mit der hypothetischen fragmentarischen Nachricht der Anfang der hypothetischen fragmentarischen Nachricht mit einem Zeitintervallbeginn des AIS-Übertragungsblocks synchronisiert wird.

13. Verfahren nach einem der Ansprüche 1 bis 12, **dadurch gekennzeichnet, dass** für die Korrelation der digitalen Daten mit der hypothetischen fragmentarischen Nachricht eine Dopplerverschiebung, die für die hypothetische fragmentarische Nachricht in Abhängigkeit einer Position des Senders berechnet wird, kompensiert wird und dass gegebenenfalls für die Kompensation der Dopplerverschiebung ein Fehler in Bezug auf die Frequenz der Trägerwelle des Senders, die in der Datenbank (26) gespeichert ist, berücksichtigt wird.

14. Verfahren nach einem der Ansprüche 1 bis 13, **dadurch gekennzeichnet, dass** für die Korrelation der digitalen Daten mit der hypothetischen fragmentarischen Nachricht der Modulationsindex des Senders, der in der Datenbank (26) gespeichert ist, berücksichtigt wird.

15. Computerprogrammprodukt, aufweisend einen Datenträger, der Anweisungen enthält, die von dem Computer ausgeführt werden können, die, wenn sie von einem Computer ausgeführt werden, den Computer veranlassen, das Verfahren nach einem der Ansprüche 1 bis 14 auszuführen.

## Claims

1. A method for detecting AIS messages, which involves
   providing digital data representing signals received by a satellite on at least one AIS channel;
   identifying a candidate message in the digital data (E18) by correlating the digital data with a hypothetical fragmentary message;
   **characterised in that** the hypothetical fragmentary message comprises at least one AIS message fragment which is dependent on transmission time and/or transmitter position and which is determined with the assistance of a database (26) of AIS transmitters.

2. The method according to claim 1, **characterised in that** the hypothetical fragmentary message comprises at least one AIS message fragment which is dependent on transmitter position and **in that** composing the hypothetical fragmentary message involves:

   identifying, on the basis of the database of AIS transmitters, an AIS transmitter located in a zone served by the satellite when the signals are received (E14);
   determining the at least one AIS message fragment which is dependent on transmitter position on the basis of a position, stored in the database, of the identified transmitter.

3. The method according to claim 2, **characterised in that** the at least one AIS message fragment which is dependent on transmitter position comprises most significant bits from the "longitude" field and/or most significant bits from the "latitude" field.

4. The method according to any one of claims 1 to 3, **characterised in that** the digital data are time stamped, **in that** the hypothetical fragmentary message comprises one or more AIS message fragments which is/are dependent on transmission time and **in that** composing the hypothetical fragmentary message includes determining the at least one AIS message fragment which is dependent on transmission time on the basis of the time stamp of the digital data.

5. The method according to claim 4, **characterised in that** the at least one AIS message fragment which depends on transmission time comprises bits from the "time stamp" field or bits from the "UTC year", "UTC month", "UTC day", "UTC hour", "UTC minute" and/or "UTC second" fields.

6. The method according to any one of claims 1 to 5, **characterised in that** the hypothetical fragmentary message comprises bits from one or more static fields specific to the transmitter identified in the database, for example the "user ID" field, the "AIS version indicator" field, the "IMO number" field, the "call sign" field, the "name" field, the "type of ship and cargo type" field, the "overall dimension/reference for position" field, the "type of electronic position fixing device" field.

7. The method according to any one of claims 1 to 6, **characterised in that** the hypothetical fragmentary message comprises bits from one or more dynamic fields specific to the transmitter identified in the database, for example the "RAIM flag" field, the "special manoeuvre indicator" field, the "estimated time of arrival" field, the "current draught" field, the "destination" field, the "navigation status" field, the "course over ground" field, the "speed over ground" field, and/or the "communication status" field.

8. The method according to any one of claims 1 to 7, **characterised in that**, once a candidate message has been identified in the digital data, the candidate message is decoded (E20), and **in that** the information contained in the decoded message is used to update said database of AIS transmitters (E22).

9. The method according to any one of claims 1 to 8, **characterised in that** the candidate message (E18) is identified by correlating the digital data with a plurality of hypothetical fragmentary messages, the various correlations being calculated in series and/or in parallel.

10. The method according to claim 9, **characterised in that** the hypothetical fragmentary messages are designed so as to test for the presence or absence of stuffing bits in the candidate message.

11. The method according to any one of claims 1 to 10, **characterised in that** the position of the satellite when the signals are received is estimated (E12") by triangulation relative to transmitters for which one or more AIS messages are identified in the digital data.

12. The method according to any one of claims 1 to 11, **characterised in that**, for correlating the digital data with the hypothetical fragmentary message, the start of the hypothetical fragmentary message is synchronised with a start of a time interval of the AIS time frame.

13. The method according to any one of claims 1 to 12, **characterised in that**, for correlating the digital data with the hypothetical fragmentary message, a calculated Doppler shift for the hypothetical fragmentary message is compensated as a function of transmitter position and, optionally, compensating the Doppler shift, account is taken of a transmitter carrier frequency error stored in said database (26).

14. The method according to any one of claims 1 to 13, **characterised in that**, for correlating the digital data with the hypothetical fragmentary message, account is taken of the transmitter modulation index stored in the database (26).

15. A computer software product comprising a data storage medium containing computer-executable instructions, which, when executed by a computer, cause the computer to carry out the method according to any one of claims 1 to 14.

**Fig. 1**

**Fig. 2**

Segment de données

Fanion de début    Séquence de vérification de trames

Séquence de conditionnement

Fanion de fin

Montée en puissance

Tampon

**Fig. 3**

```
┌─────────────────────┐        ┌─────────────────────┐
│ Collecte de données │        │ Détermination de la │
│    par satellite    │        │ trajectoire du      │
│                     │        │ satellite           │
└─────────────────────┘        └─────────────────────┘
        E10                            E12
```

Identification d'émetteurs SIA — E14

Base de données — 26

Composition de messages fragmentaires hypothétiques — E16

Recherche de messages candidats dans les données — E18

Affichage de la cartographie des émetteurs SIA — E24

Décodages des parties inconnues des messages trouvés — E20

Mise à jour de la base de données — E22

21

**Fig. 4**

Champ « ID utilisateur »

Fragments de message

Champ « longitude »

Champ « latitude »

Lacunes

Champ « horodatage »

Segment de données

Fanion de début

Séquence de vérification de trames

Séquence de conditionnement

Fanion de fin

**Fig. 5**

**Fig. 6**

1er fragment      2e fragment      3e fragment

L1    L2    L3    ...

K1      K2    K3    K4    ...

1re lacune

2e lacune

3e lacune

**Fig. 7**

+ 4 kHz

42

40

$N_{sat}$   36

0 kHz

34

38

- 4 kHz

**Fig. 8**

**EP 2 566 069 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7876865 B